# EUROPÄISCHE PATENTSCHRIFT

(11) **EP 0 992 375 B1**
(45) Veröffentlichungstag und Bekanntmachung des Hinweises auf die Patenterteilung: **26.11.2003**
(21) Anmeldenummer: 99116892.3
(22) Anmeldetag: 07.09.1999
(51) Int. Cl.: B60G 21/05, B60B 35/02

(54) **Verbundlenker-Hinterachse**
Twist beam rear axle
Essieu arrière à traverse déformable en torsion

(30) Priorität: 08.10.1998 DE 19846399
(43) Veröffentlichungstag der Anmeldung: 12.04.2000
(73) Patentinhaber: Volkswagen Aktiengesellschaft, 38436 Wolfsburg (DE)
(72) Erfinder: Kopischke, Hergo, 38110 Braunschweig (DE); Nitsche, Michael, Dipl.-Ing., 38302 Wolfenbüttel (DE); Jablonski, Thorsten, 31226 Peine (DE); Holsten, Herfred, 38112 Braunschweig (DE)

(56) Entgegenhaltungen:
- EP-A- 0 552 537
- CH-A- 284 977
- DE-A- 2 740 948
- DE-A- 4 003 922
- DE-A- 19 533 479
- DE-B- 2 735 939
- DE-C- 19 653 959
- FR-A- 2 745 240
- GB-A- 1 342 642
- US-A- 4 813 507
- US-A- 5 507 518
- US-A- 5 518 265
- US-A- 5 800 024

## Beschreibung

Die Erfindung bezieht sich auf eine Verbundlenker-Hinterachse nach dem Oberbegriff von Patentanspruch 1.

Im Stand der Technik sind unterschiedliche Stabilisatoren bekannt, mit deren Hilfe für den Querträger einer Verbundlenker-Hinterachse jeweils eine bestimmte Torsionssteifigkeit realisiert wird. Einerseits muß der Querträger torsionsweich ausgebildet sein, damit jeweils auf den Seiten unterschiedliche Einfederwege und/oder entsprechende Kurvenfahrten eines Kraftfahrzeugs unter entsprechenden sicherheitstechnischen Aspekten realisierbar sind. Andererseits muß aber genau aus diesen sicherheitstechnischen Aspekten der Querträger auch eine bestimmte Torsionssteifigkeit aufweisen, um eine bestimmte Wanksteifigkeit des Fahrzeugs während der Fahrt zu gewährleisten.

So werden im Stand der Technik Vollprofil-Rundstangen oder auch Hohlprofil-Stangen (Rohre) als Stabilisatoren für derartige Querträger einer Verbundlenker-Hinterachse eingesetzt. Hierbei erstrecken sich diese Stabilisatoren über den gesamten Querträger zwischen den jeweiligen Längslenkern.

Des weiteren sind unterschiedliche Formen für den Querträger bekannt, die eine entsprechende Torsionssteifigkeit des Querträgers gewährleisten. So zeigt die DE-C-196 53 959 einen doppelwandig ausgeführten Querträger, der im Querschnitt eine U-Form oder eine V-Form bzw. eine Nierenform aufweisen kann, um die entsprechende Torsionssteifigkeit zu gewährleisten.

Weiterhin sind aus der DE-C-40 03 922 stabilisatorähnliche Elemente bekannt, die zwischen den Längslenkern und dem Querträger anordenbar sind.

Die im Stand der Technik bekannten Stabilisatoren haben jedoch den Nachteil, daß deren Gewicht zum einen relativ groß ist, insbesondere bei Vollmaterial-Rundstangen, und deren Anordnung innerhalb des Querträgers bzw. die Verbindung dieser Stabilisatoren zwischen Querträger und Längslenker äußerst arbeitsaufwendig ist.

Weiterhin ist bekannt, ein gewünschtes Biege- und Torsionsverhalten allein durch eine besondere Gestaltung eines Querträgers zu realisieren, der so quasi die Stabilisatorwirkung integriert. In der FR 2 745 240 A1 wird dies durch einen einstückigen Querträger in Form eines geschlossenen Hohlprofils realisiert, der in besonderer Weise beschnitten ist. Aus der CH 284977 ist wiederum bekannt, einen Querträger durch eingeschweißte Längsblechstreifen zu versteifen.

Die gattungsbildende DE 27 40 948 A1 offenbart einen Querträger und einen separaten Stabilisator, der an den Querträger angeschweißt ist. Querträger und Stabilisator liegen dabei flach aufeinander auf.

Der Erfindung liegt daher die Aufgabe zugrunde, eine solche Verbundlenker-Hinterachse der eingangs genannten Art derart weiterzubilden, daß deren Gesamtgewicht verringert und deren Herstellungsaufwand minimiert ist

Diese Aufgabe wird durch eine Verbundlenker-Hinterachse mit den Merkmalen von Patentanspruch 1 gelöst. Durch die Beabstandung ergibt sich insbesondere auch gegenüber Stabilisatoren aus Vollmaterial eine Gewichtseinsparung. Weiterhin ist die Montage des als Blech ausgeführten Stabilisators an dem Querträger verglichen mit der Montage der im Stand der Technik bekannt Stabilisatoren sehr vereinfacht, da der als Blech ausgeführte Stabilisator leicht handhabbar ist. Auch gewährleistet der als Blech ausgeführte Stabilisator eine bestimmte Torsionssteifigkeit oder dient sogar, entsprechend dimensioniert, zur Erhöhung der Torsionssteifigkeit.

Vorteilhafte Ausgestaltungen der Erfindung sind in den weiteren Patentansprüchen angegeben. Nachfolgend wird nun ein bevorzugtes Ausführungsbeispiel der Erfindung anhand einer Zeichnung näher erläutert. In der Zeichnung zeigt
- Fig. 1: einen im Bereich eines Querträgers angeordneten Stabilisator teilweise geschnitten in einer schematischen perspektivischen Darstellung,
- Fig. 2: ein noch ungeformtes Stabilisatorblech kurz vor der Umformung zur Form des in Fig. 3 dargestellten Stabilisators,
- Fig. 3: einen Stabilisator in einer schematischen Ansicht von vorne, und
- Fig. 4: den in Fig. 3 schematisch dargestellten Stabilisator in schematischer Darstellung von der Seite.

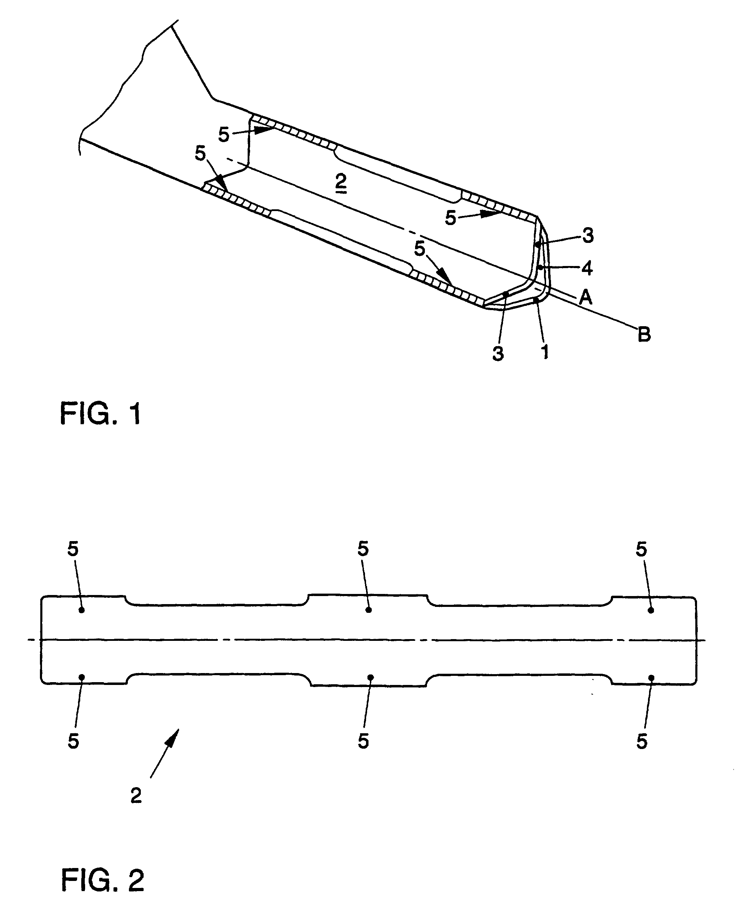

Die Fig. 1 zeigt - nur teilweise - einen Querträger 1 einer nicht dargestellten Verbundlenker-Hinterachse. Der Querträger 1 ist biegesteif und torsionsweich ausgebildet. An jedem Ende des Querträgers 1 ist ein nicht dargestellter Längslenker angeordnet, wobei jeder Längslenker einenends zur Aufnahme eines Radträgers und anderenends zur Anlenkung an einen Fahrzeugaufbau entsprechend ausgebildet ist. Innerhalb des Bereichs des Querträgers 1 ist ein eine bestimmte Torsionssteifigkeit des Querträgers 1 gewährleistender Stabilisator 2 vorgesehen.

Die eingangs beschriebenen Nachteile werden nun dadurch vermieden, daß der Stabilisator 2 als ein Blech ausgeführt ist. Hierdurch sind größere Gewichtseinsparungen für eine Verbundlenker-Hinterachse realisierbar, wobei aber eine bestimmte Torsionssteifigkeit des Querträgers 1, d.h. eine bestimmte Wanksteifigkeit des Fahrzeugs gewährleistet ist. Anders ausgedrückt, es werden hohe Gewichtseinsparungen bei geringen Produktionskosten, bei der Verbundlenker-Hinterachse durch den Stabilisator 2 möglich, wobei nach wie vor gleiche Wank- bzw. Torsionsraten der entsprechenden Verbundlenker-Hinterachse gewährleistet sind.

Der in den Fig. 1, 3 und 4 dargestellte Stabilisator 2 wird im wesentlichen mittig innerhalb des Querträgers 1 angeordnet, nämlich nachträglich im Querträger 1 angeschweißt.

Fig. 1, 3 und 4 lassen erkennen, daß der Stabilisator 2 V-förmig ausgeführt ist, der Stabilisator 2 zwei Schenkel 3 aufweist und der Stabilisator 2 derartig innerhalb des Querträgers 1 angeordnet ist, daß in dem entsprechenden Bereich ein doppelwandiges V-Profil aus dem Querträger 1 und dem Stabilisator 2 gebildet ist.

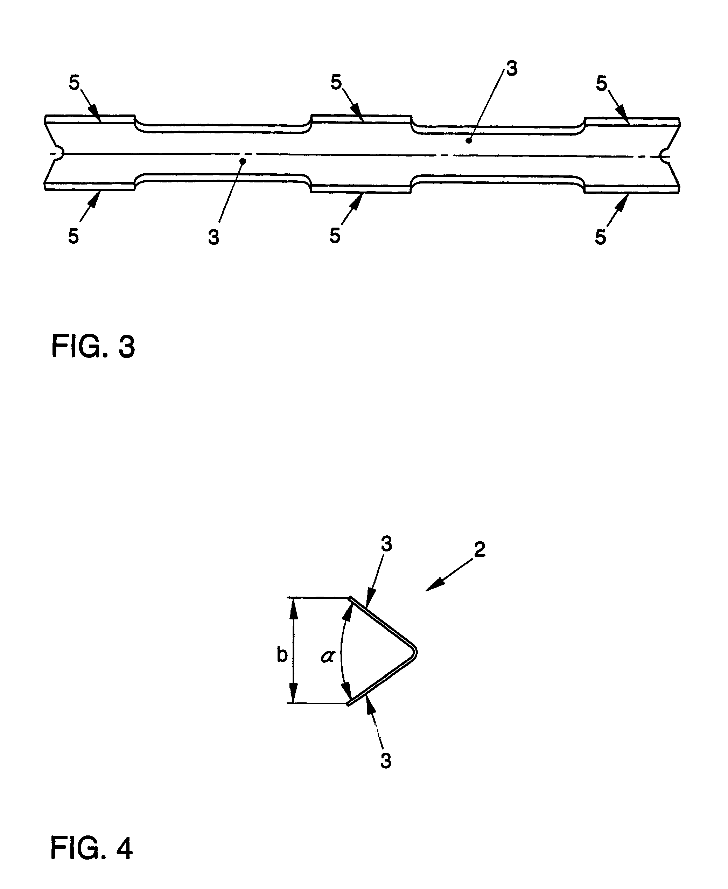

Der Stabilisator 2 weist eine durch die Verbindung der beiden Schenkel 3 gebildete Basisachse A auf. Diese ist in Fig. 1 und Fig. 3 durch eine strichpunktierte Darstellung zu erkennen. Der Stabilisator 2 ist nun derartig innerhalb des Querträgers 1 angeordnet, daß die im Bereich der Basisachse A vorgesehene Außenwandung des Stabilisators 2 in einem bestimmten Abstand zur Achse B des Querträgers 1 angeordnet ist. Zwischen Stabilisator 2 und Querträger 1 ist ein Zwischenraum 4 ausgebildet.

Der Stabilisator 2 weist über seine Länge verteilt mehrere für das Anschweißen an den Querträger 1 geeignet ausgebildete Bereiche 5 auf. Diese Bereiche 5 sind in Fig. 1 und Fig. 3 deutlich zu erkennen, wobei in Fig. 1 durch die gestrichelte Darstellung die Schweißnaht dargestellt ist, die den Stabilisator 2 mit dem Querträger 1 verbindet. Weiterhin ist aus Fig. 1 erkennbar, daß die oberen Enden der Schenkel 3 der Bereiche 5 des Stabilisators 2 mit den oberen Enden des V-förmig ausgebildeten Querträgers 1 mit der entsprechenden Schweißnaht, abschließen.

Der in Fig. 3 dargestellte Stabilisator 2 weist vzw. eine Längs I von 550 mm und eine Breite b von 70 mm (vgl. Fig. 4) auf. Die Fig. 4 zeigt, daß die Schenkel 3 des Stabilisators 2 einen entsprechenden Öffnungswinkel 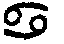 von vzw. 60° bilden.

Durch eine bestimmte Blechdicke des Stabilisators 2 ist auch eine bestimmte Torsionssteifigkeit des Querträgers 1 der Verbundlenker-Hinterachse realisierbar. Vzw. weist der Stabilisator 2 eine Blechdicke von 5 mm auf.

Weiterhin zeigt die Fig. 2 ein Stabilisatorblech kurz vor der Umformung zum Stabilisator 2. Auch hier ist deutlich zu erkennen, daß der Stabilisator 2 an seinen Enden jeweils entsprechende für das Anschweißen geeignete Bereiche 5 aufweist sowie mittig einen weiteren für das Anschweißen geeigneten Bereich 5 aufweist. Die an den Enden des Stabilisators 2 ausgebildeten Bereiche 5 sowie der mittig vorgesehene Bereich 5 weisen - im Zustand des ungeformten Stabilisatorbleches - eine Breite von ca. 100 mm auf, wobei die äußeren Bereiche 5 eine Länge von 80 mm und der mittlere Bereich 5 eine Länge von 90 mm aufweist. Vzw. wird der Stabilisator 2 aus dem Material ST 37-2 hergestellt.

Im Ergebnis ist hier eine Verbundlenker-Hinterachse geschaffen, die eine entsprechende Torsionssteifigkeit aufweist und sehr kostengünstig herstellbar ist.

## Patentansprüche

1. Verbundlenker-Hinterachse mit einem biegesteifen und torsionsweichen Querträger (1) und zwei Längslenkern, wobei an jedem Ende des Querträgers (1) ein Längslenker angeordnet ist und jeder Längslenker einenends zur Aufnahme eines Radträgers und anderenends zur Anlenkung an einen Fahrzeugaufbau entsprechend ausgebildet ist, und mit einem innerhalb des Bereiches des Querträgers (1) vorgesehen Stabilisator (2), der eine bestimmte Torsionssteifigkeit des Querträgers (1) gewährleistet und als ein sich in Längsrichtung des Querträgers erstreckendes, V-förmiges Blech mit zwei Schenkeln (3) ausgeführt und an den Querträger (1) angeschweißt ist, **dadurch gekennzeichnet, daß** der Stabilisator (2) an den oberen Enden der Schenkel (3) mittig sowie an seinen Enden Anschweißbereiche (5) aufweist und nur mit diesen Anschweißbereichen (5) jeweils an die oberen Enden des Querträgers anschließt und dort mit dem Querträger (1) verschweißt ist, wobei die oberen Enden der Schenkel (3) mit den oberen Enden des Querträgers (1) an der entsprechenden Schweißnaht abschließen und zwischen der Basisachse (A) an der Verbindung der beiden Schenkel (3) einerseits und dem Querträger (1) anderenseits ein Zwischenraum (4) besteht.

2. Verbundlenker-Hinterachse nach Anspruch 1, **dadurch gekennzeichnet, daß** der Stabilisator (2) im wesentlichen mittig innerhalb des Querträgers (1) angeordnet ist.

3. Verbundlenker-Hinterachse nach Anspruch 1 oder 2, **dadurch gekennzeichnet, daß** der Stabilisator (2) derartig innerhalb des Querträgers (1) angeordnet ist, daß in diesem Bereich ein doppelwandiges V-Profil gebildet ist.

4. Verbundlenker-Hinterachse nach einem der Ansprüche 1 bis 3, **dadurch gekennzeichnet, daß** der Stabilisator (2) derartig angeordnet ist, daß die im Bereich der Basisachse (A) vorgesehene Außenwandung der Basisachse (A) in einem bestimmten Abstand zur Achse (B) des Querträgers (1) angeordnet ist.

5. Verbundlenker-Hinterachse nach einem der Ansprüche 1 bis 4, **dadurch gekennzeichnet, daß** der Stabilisator (2) eine Länge (I) von 550 mm und eine Breite (b) von 70 mm aufweist.

6. Verbundlenker-Hinterachse nach einem der Ansprüche 1 bis 5, **dadurch gekennzeichnet, daß** der durch die Schenkel (3) gebildete Öffnungswinkel (α) 60° beträgt.

7. Verbundlenker-Hinterachse nach einem der Ansprüche 1 bis 6, **dadurch gekennzeichnet, daß** durch eine bestimmte Blechdicke des Stabilisators (2) auch eine bestimmte Torsionssteifigkeit des Querträgers (1 ) realisierbar ist.

8. Verbundlenker-Hinterachse nach einem der Ansprüche 1 bis 7, **dadurch gekennzeichnet, daß** der Stabilisator (2) an seinen Enden jeweils entsprechende für das Anschweißen geeignete Bereiche (5) von 80 mm Länge und mittig einen weiteren für das Anschweißen geeigneten Bereich (5) von 90 mm Länge aufweist.

## Claims

1. Twist-beam rear axle, with a flexurally rigid and torsionally soft crossmember (1) and with two longitudinal links, one longitudinal link being arranged at each end of the crossmember (i), and each longitudinal link being correspondingly designed, at one end, for receiving a wheel carrier and, at the other end, for articulation on a vehicle body, and with a stabilizer (2) which is provided within the region of the crossmember (1) and which ensures a defined torsional rigidity of the crossmember (1) and is designed as a V-shaped plate extending in the longitudinal direction of the crossmember and having two legs (3) and is welded onto the crossmember (1), **characterized in that** the stabilizer (2) has weld-on regions (5) at the upper ends of the legs (3) centrally and at its ends and adjoins the upper ends of the crossmember in each case only with these weld-on regions (5) and is welded to the crossmember (1) there, the upper ends of the legs (3) being flush with the upper ends of the crossmember (1) at the corresponding weld seam and an interspace (4) existing between the base axis (A) at the connection of the two legs (3), on the one hand, and the crossmember (1), on the other hand.

2. Twist-beam rear axle according to Claim 1, **characterized in that** the stabilizer (2) is arranged essentially centrally within the crossmember (1).

3. Twist-beam rear axle according to Claim 1 or 2, **characterized in that** the stabilizer (2) is arranged within the crossmember (1) in such a way that a double-walled V-profile is formed in this region.

4. Twist-beam rear axle according to one of Claims 1 to 3, **characterized in that** the stabilizer (2) is arranged in such a way that the outer wall of the base axis (A), the said outer wall being provided in the region of the base axis (A), is arranged at a defined distance from the axis (B) of the crossmember (1).

5. Twist-beam rear axle according to one of Claims 1 to 4, **characterized in that** the stabilizer (2) has a length (1) of 550 mm and a width (b) of 70 mm.

6. Twist-beam rear axle according to one of Claims 1 to 5, **characterized in that** the opening angle (α) formed by the legs (3) is 60°.

7. Twist-beam rear axle according to one of Claims 1 to 6, **characterized in that**, by means of a defined plate thickness of the stabilizer (2), a defined torsional rigidity of the crossmember (1) can also be implemented.

8. Twist-beam rear axle according to one of Claims 1 to 7, **characterized in that** the stabilizer (2) has at its ends in each case corresponding regions (5) of a length of 80 mm, which are suitable for welding-on, and, centrally, a further region (5) of a length of 90 mm which is suitable for welding-on.

## Revendications

1. Essieu arrière à bielle de liaison avec une traverse (1) rigide en flexion et déformable en torsion et avec deux bielles longitudinales, une bielle longitudinale étant agencée à chaque extrémité de la traverse (1) et chaque bielle longitudinale étant conformée en correspondance pour recevoir à une extrémité un support de roue et à l'autre extrémité pour être articulée sur une carrosserie d'automobile, avec un stabilisateur (2) prévu à l'intérieur de l'espace de la traverse (1) qui assure une rigidité en torsion déterminée de la traverse (1) et qui est réalisé en tôle en forme de V avec deux ailes (3) s'étendant dans la direction longitudinale de la traverse et est soudé à la traverse (1), **caractérisé en ce que** le stabilisateur (2) présente au milieu ainsi qu'à ses extrémités des zones de soudage (5) aux extrémités supérieures de l'aile (3), est uniquement relié à intervalles aux extrémités supérieures de la traverse par ces zones de soudage (5) et est à ce niveau soudé à la traverse (1), les extrémités supérieures de l'aile (3) étant reliées aux extrémités supérieures de la traverse (1) par la soudure correspondante, un espace (4) intermédiaire étant prévu entre l'axe de base (A) à la jonction des deux ailes (3) d'une part et la traverse (1) d'autre part.

2. Essieu arrière à bielle de liaison selon la revendication 1, **caractérisé en ce que** le stabilisateur (2) est agencé essentiellement au milieu à l'intérieur de la traverse (1).

3. Essieu arrière à bielle de liaison selon la revendication 1 ou 2, **caractérisé en ce que** le stabilisateur (2) est agencé à l'intérieur de la traverse (1) de façon telle qu' un profil en V à double paroi soit formé dans cette zone.

4. Essieu arrière à bielle de liaison selon l'une des revendications 1 à 3, **caractérisé en ce que** le stabilisateur (2) est agencé de façon telle que la paroi externe de l'axe de base (A) prévue dans la zone de l'axe de base (A) est agencée à une distance déterminée de l'axe (B) de la traverse (1).

5. Essieu arrière à bielle de liaison selon l'une des revendications 1 à 4, **caractérisé en ce que** le stabilisateur (2) présente une longueur (1) de 550 mm et une largeur (b) de 70 mm.

6. Essieu arrière à bielle de liaison selon l'une des revendications 1 à 5, **caractérisé en ce que** l'angle d'ouverture (α) formé par les ailes (3) fait 60°.

7. Essieu arrière à bielle de liaison selon l'une des revendications 1 à 6, **caractérisé en ce qu'**une rigidité en torsion déterminée de la traverse (1) peut également être réalisée grâce à une épaisseur de tôle déterminée du stabilisateur (2).

8. Essieu arrière à bielle de liaison selon l'une des revendications 1 à 7, **caractérisé en ce que** le stabilisateur (2) présente à ses extrémités des zones correspondantes (5) longues de 80 mm qui conviennent pour le soudage et au milieu une autre zone (5) longue de 90 mm qui convient pour le soudage.
